# EUROPÄISCHE PATENTSCHRIFT

(11) **EP 2 911 312 B1**
(45) Veröffentlichungstag und Bekanntmachung des Hinweises auf die Patenterteilung: **28.03.2018**
(21) Anmeldenummer: 15151950.1
(22) Anmeldetag: 21.01.2015
(51) Int. Cl.: H04B 5/00, H01F 27/36, H01F 38/14, H01Q 1/27, H01Q 1/52

(54) **Antenne mit Schirmvorrichtung und Herstellungsverfahren**
Antenna with screening device and manufacturing method
Antenne dotée de dispositif de protection et procédé de fabrication

(30) Priorität: 21.02.2014 DE 102014203169
(43) Veröffentlichungstag der Anmeldung: 26.08.2015
(73) Patentinhaber: Sivantos Pte. Ltd., Singapore 539775 (SG)
(72) Erfinder: Lim, Seng Shin, 139959 Singapore (SG)
(74) Vertreter: FDST Patentanwälte

(56) Entgegenhaltungen:
- US-A- 5 981 920
- US-A1- 2003 031 339
- US-B2- 7 592 964

## Beschreibung

Die vorliegende Erfindung betrifft eine Antenne für ein Hörgerät mit einer im Wesentlichen zylindrischen Spulenvorrichtung als elektromagnetische Sende- und/oder Empfangseinheit sowie einer Schirmvorrichtung, die die Spulenvorrichtung umgibt und deren Grundkörper ein flexibles Substrat ist. Darüber hinaus betrifft die vorliegende Erfindung ein Verfahren zum Herstellen einer Antenne für ein Hörgerät.

Hörvorrichtungen besitzen oftmals Antennen für drahtlose Nahfeldübertragung. Solche Übertragungen werden beispielsweise zur Kommunikation mit Zusatzgeräten oder mit Geräten gleicher Bauart (z. B. binaurales Hörgerätesystem) verwendet. Unter einer Hörvorrichtung wird hier jedes im oder am Ohr tragbare, einen Schallreiz erzeugende Gerät, insbesondere ein Hörgerät, ein Headset, Kopfhörer und dergleichen verstanden.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

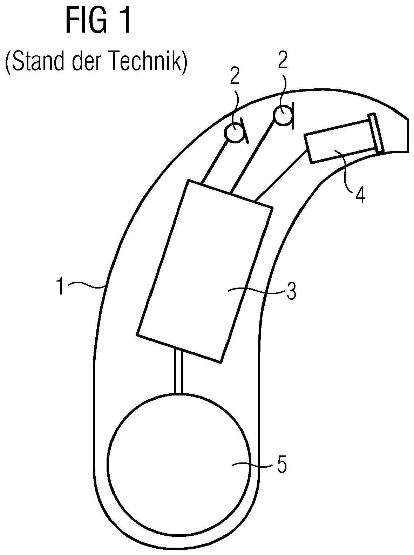

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Energieversorgung des Hörgeräts und insbesondere die der Signalverarbeitungseinheit 3 erfolgt durch eine ebenfalls ins Hörgerätegehäuse 1 integrierte Batterie 5.

Zur drahtlosen Übertragung sind beim Empfänger wie auch beim Sender Antennen notwendig. Ungeschirmte Antennen sind sowohl gegen elektrische (E-Feld) als auch magnetische (H-Feld) Interferenzen empfindlich, die von nahegelegenen elektronischen Komponenten erzeugt werden. Derartige Störfelder oder Interferenzen führen zu einer Verschlechterung des drahtlosen Nutzsignals, sodass das Kommunikationssignal vom Sender durch den Empfänger unter Umständen nicht oder nur mit geringerer Qualität empfangen wird. Damit ist die Leistungsfähigkeit des drahtlosen Kommunikationssystems herabgesetzt.

Zur Vermeidung derartiger Degradationen werden ungeschirmte Antennen für Drahtlosverbindungen in der Regel von elektronischen Komponenten, die elektrische und magnetische Störungen emittieren, beabstandet. Dies beeinträchtigt die Freiheit bei der Platzierung der Antennen in der Hörvorrichtung beziehungsweise dem Hörgerät, insbesondere dem Hinter-dem-Ohr-Hörgerät. Bei einigen Hörgeräten ist es aber aus Gestaltungsgründen notwendig, dass die Antenne zur Drahtlosübertragung näher an einer elektronischen Komponente angeordnet ist, die ein elektrisches oder magnetisches Störfeld produziert. In solchen Fällen sind meist Abschirmungen in Form von Abdeckungen oder kleinen Boxen vorgesehen. Spezifisch sind dann jene Elektronikbauteile abgeschirmt beziehungsweise ummantelt, die die unerwünschten elektrischen und magnetischen Störfelder produzieren. Aufgrund der unterschiedlichen Bauarten der Hörvorrichtungen und deren Elektronikkomponenten sind daher zahlreiche Schirmabdeckungen unterschiedlicher Größe und Gestalt bereitzustellen.

Aus der Druckschrift US 7 592 964 B2 ist eine oberflächenmontierte Spule für Drahtlosübertragung bekannt. Die Spule besitzt einen Draht, der um einen Kern gewickelt ist. Darüber hinaus besitzt die Spule eine Abschirmschicht, die um einen Zentralabschnitt des Kerns gewickelt ist, sodass die Wicklungen abgedeckt sind. Die Abschirmschicht besitzt ein aus Leitern gebildetes Schirmmuster und einen Kontaktabschnitt zum Kontaktieren mit Massepotenzial.

Aus der US 2003/0031339 A1 ist eine auf einem Substrat angeordnete Spule zu entnehmen, welche zu Schirmzwecken von einem haubenartigen Gehäuse umgeben ist, welches auf das plattenförmige Substrat aufgesetzt ist.

Die Aufgabe der vorliegenden Erfindung besteht darin, eine Antenne für eine Hörvorrichtung vorzuschlagen, die auf einfache Weise mit einer Schirmvorrichtung versehen werden kann. Darüber hinaus soll ein entsprechendes Herstellungsverfahren für eine Antenne einer Hörvorrichtung angegeben werden.

Erfindungsgemäß wird diese Aufgabe gelöst durch eine Antenne für ein Hörgerät mit einer im Wesentlichen zylindrischen Spulenvorrichtung als elektromagnetische Sende- und/oder Empfangseinheit und einer Schirmvorrichtung, die die Spulenvorrichtung umgibt und deren Grundkörper ein flexibles Substrat ist, wobei die Schirmvorrichtung einteilig gebildet und durch zwei Schnitte, die an keinem ihrer Enden an den Rand des Substrats reichen, in drei Abschnitte unterteilt ist und die Spulenvorrichtung so durch die zwei Schnitte der Schirmvorrichtung gesteckt ist, dass jeder der Abschnitte die Spulenvorrichtung in Umfangsrichtung nur teilweise umgibt.

Darüber hinaus wird erfindungsgemäß bereitgestellt ein Verfahren zum Herstellen einer Antenne für ein Hörgerät durch Bereitstellen einer im Wesentlichen zylindrischen Spulenvorrichtung als elektromagnetische Sende- und/ oder Empfangseinheit und Bereitstellen einer Schirmvorrichtung zum Schirmen der Spulenvorrichtung, wobei der Grundkörper der Schirmvorrichtung ein flexibles Substrat ist, wobei die Schirmvorrichtung einteilig gebildet und durch zwei Schnitte, die an keinem ihrer Enden an den Rand des Substrats reichen, in drei Abschnitte unterteilt ist, und die Spulenvorrichtung so durch die zwei Schnitte der Schirmvorrichtung gesteckt wird, dass jeder der Abschnitte die Spulenvorrichtung in Umfangsrichtung nur teilweise umgibt.

In vorteilhafter Weise wird also zum Schirmen einer Spulenvorrichtung eine Schirmvorrichtung auf der Basis eines flexiblen Substrats verwendet, welches durch zwei Schnitte in drei Abschnitte geteilt ist. Für die Montage wird dann nur die Spulenvorrichtung durch die beiden Schnitte geführt, sodass die Schirmvorrichtung auf der Spulenvorrichtung steckt und diese bereichsweise umgibt. Im Wesentlichen umgibt ein mittlerer Bereich der Schirmvorrichtung die Spulenvorrichtung an einem Abschnitt ihres Außenumfangs, während die äußeren beiden Abschnitte der Schirmvorrichtung die Spulenvorrichtung an gegenüberliegenden Umfangsbereichen umgeben. Somit ist zum einen eine sehr einfache Herstellung der Schirmvorrichtung und zum anderen eine wenig aufwändige Montage auf die Spulenvorrichtung möglich.

Bei einer Ausführungsform besitzt die Schirmvorrichtung in allen drei Abschnitten ein elektrisch zusammenhängendes Leitergebilde. Damit ist eine Schirmung durch alle drei Abschnitte gegeben. Alternativ kann das Leitergebilde aber auch beispielsweise nur in dem mittleren Abschnitt vorgesehen sein.

Das Leitergebilde kann zahlreiche parallele Leiterbahnen aufweisen. Diese lassen sich leicht herstellen und sorgen für eine effiziente Schirmwirkung.

In einer Ausgestaltung sind die Schnitte der Schirmvorrichtung parallel zueinander und die Leiterbahnen parallel zu den Schnitten angeordnet. Dies hat den Vorteil, dass die Position der Schnitte verändert werden kann, ohne dass das Leitergebilde selbst verändert werden müsste. Somit lassen sich unterschiedlich lange Schirmvorrichtungen für verschieden lange Spulenvorrichtungen aus ein und demselben Bandmaterial nur durch Abschneiden und Einbringen der Schnitte erzeugen.

Vorzugsweise sind die drei Abschnitte der Schirmvorrichtung in axialer Richtung der im Wesentlichen zylinderförmigen Spulenvorrichtung hintereinander angeordnet, und die äußeren beiden der drei Abschnitte besitzen jeweils ein erstes Kontaktfeld zum direkten Kontaktieren eines Masseanschlusses, wobei die Kontaktfelder mit Leitern der Schirmvorrichtung elektrisch verbunden sind. Damit liegen die Kontaktfelder für die Schirmvorrichtung am Außenumfang der Antenne, weshalb sich die Schirmvorrichtung leicht mit Masse verbinden lässt.

Darüber hinaus können die äußeren beiden der drei Abschnitte jeweils ein zweites Kontaktfeld zum direkten Kontaktieren eines Leiters der Spulenvorrichtung besitzen. Wenn die ersten und zweiten Kontaktfelder dabei möglichst parallel nach außen gewandt sind, ergibt damit eine SMD-Bauform der Antenne. Somit lässt sich eine geschirmte Antenne für eine wirtschaftlich vorteilhafte SMD-Produktion bereitstellen.

Die Schirmvorrichtung kann eine flexible Leiterplatte mit dem flexiblen Substrat aufweisen. Derartige flexible Leiterplatten sind kostengünstig in der Herstellung und als Massenware erhältlich. Insbesondere kann die flexible Leiterplatte eine gedruckte Leiterplatte sein.

Für die Herstellung eines SMD-Bauteils ist es besonders vorteilhaft, wenn die Spule einen Kern aufweist, dessen Querschnitt ein Kreissegment ist. Damit besitzt der Kern eine flache Seite parallel zu seiner Achse. Diese flache Seite lässt sich dazu nutzen, die Kontaktfelder der Schirmvorrichtung parallel anzuordnen, sodass ein stabiles SMD-Bauteil entsteht.

Die vorliegende Erfindung wird anhand der beigefügten Zeichnungen näher erläutert, in denen zeigen:
- FIG 1: den prinzipiellen Aufbau eines Hörgeräts gemäß dem Stand der Technik;
- FIG 2: eine Draufsicht auf eine flexible plattenförmige Schirmvorrichtung;
- FIG 3: eine Spulenvorrichtung im ungeschirmten Zustand;
- FIG 4: die Spulenvorrichtung von FIG 3 eingesteckt in die Schirmvorrichtung von FIG 2 in der Draufsicht;
- FIG 5: eine Längsseitenansicht der Antenne von FIG 4;
- FIG 6: eine Stirnseitenansicht der Antenne von FIG 4 und
- FIG 7: eine Unterseitenansicht der Antenne von FIG 4.

Die nachfolgend näher geschilderten Ausführungsbeispiele stellen bevorzugte Ausführungsformen der vorliegenden Erfindung dar.

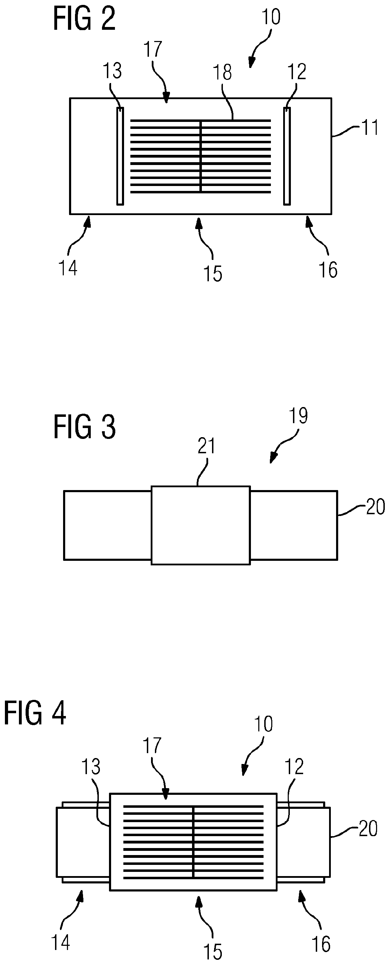

Eine Hörvorrichtung und insbesondere ein Hörgerät gemäß dem Beispiel von FIG 1 kann mit einer Antenne zur drahtlosen Übertragung von Signalen ausgestattet sein. Eine derartige Antenne ist skizzenhaft in den Figuren 4 bis 7 in verschiedenen Seitenansichten dargestellt. Zur Verdeutlichung des Herstellungsverfahrens dienen die Figuren 2 und 3.

Soll beispielsweise eine Antenne zur drahtlosen Signalübertragung in einem Hörgerät in der Nähe eines Verstärkerbausteins angeordnet werden können, so sollte sie entsprechend geschirmt sein, um eine hohe Qualität der drahtlosen Übertragung gewährleisten zu können. Für die Schirmung ist es ausschlaggebend, das E-Feld und H-Feld in ausreichendem Maße abhalten zu können. Gleichzeitig sollte die Schirmung leicht herzustellen und leicht zu montieren sein. Ferner ist es günstig, wenn die Schirmung für unterschiedliche Bauarten einer Antennenspule (Spulenvorrichtung) verwendet werden kann, um auch Instrumente niederpreisigerer Plattformen bedienen zu können. Spulenvorrichtungen für Hörgeräte besitzen beispielsweise eine typische Länge von 5 bis 6 mm. Darüber hinaus wäre es vorteilhaft, wenn die geschirmten Antennen als SMD-Bauteile zur Verfügung stünden.

Um all diesen Forderungen (gegebenenfalls auch nur einer oder mehreren davon) gerecht zu werden, wird die in den Figuren 2 bis 7 näher dargestellte beispielhafte Antenne gemäß der vorliegenden Erfindung vorgeschlagen. Dabei kann aber auch auf bestimmte Details verzichtet werden, insbesondere diejenigen, die ein SMD-Bauteil charakterisieren.

FIG 2 gibt eine Schirmvorrichtung 10 vor der Montage wieder. Bei der Schirmvorrichtung 10 handelt es sich um ein plattenförmiges Gebilde mit einem flexiblen Substrat 11. Dieses Substrat 11 kann beispielsweise eine Polyimidfolie sein. In das Substrat sind hier zwei Schnitte 12 und 13 eingebracht, die das rechteckige Substrat in drei Abschnitte 14, 15 und 16 unterteilen. Die beiden Schnitte 12 und 13 verlaufen hier parallel zueinander und parallel zu zwei gegenüberliegenden Seiten des rechteckförmigen Substrats 11. Die Schnitte 12 und 13 reichen nicht bis zum Rand des Substrats. Dies bedeutet, dass die Enden der Schnitte 12 und 13 im Inneren des Substrats 11 gelegen sind. Weiterhin bedeutet dies, dass die Abschnitte 14, 15 und 16 des Substrats 11 einteilig miteinander verbunden sind. Nur jeweils eine gedankliche Verlängerung der Schnitte 12 und 13 ergibt die jeweiligen Abschnittsgrenzen zwischen diesen Abschnitten 14, 15 und 16.

In das Substrat 11 wird ein Leitergebilde 17 eingebracht, oder es wird auf das Substrat 11 aufgebracht. Vorzugsweise wird es in dem größten Bereich des mittleren Abschnitts 15 zwischen den beiden Schnitten 12 und 13 ein- oder aufgebracht. In dem Beispiel von FIG 2 ist das Leitergebilde 17 nahezu über den gesamten Zentralbereich des mittleren Abschnitts 15 angeordnet. Lediglich Randbereiche davon sind frei, um beispielsweise die Schnitte 12 und 13 nachträglich in das Substrat 11 einbringen zu können.

Das Substrat 11 der Schirmvorrichtung 10 kann auch eine andere als eine Rechteckform besitzen. Darüber hinaus können die Schnitte 12 und 13 auch schräg angeordnet sein. Ferner können auch mehr als zwei Schnitte, z. B. vier Schnitte, vorgesehen sein. Auch wenn die Schnitte im Beispiel von FIG 2 geradlinig verlaufen, sind sie nicht darauf beschränkt.

Leiterbahnen 18 des Leitergebildes 17 verlaufen im Beispiel von FIG 2 parallel zu den Längsseiten des rechteckförmigen Substrats 11. Dies kann für bestimmte Verwendungen vorteilhaft sein. Für andere Anforderungen ist es unter Umständen günstiger, wenn die Vielzahl an Leiterbahnen des Leitergebildes zwar parallel zueinander, aber auch parallel zu den Schnitten 12 und 13 verlaufen, wobei sie beispielsweise durch eine durchgehend an einer Längsseite des Substrats 11 verlaufenden Leiterbahn elektrisch verbunden sein können. Diese läuft also über die Abschnittsgrenzen hinweg. Folglich kann die Schirmvorrichtung 10 in beliebiger Länge aus einem Bandmaterial ausgestanzt beziehungsweise ausgeschnitten werden und die Schnitte 11, 12 können bei dieser Konstellation zwischen beliebigen Leiterbahnen gesetzt werden. Dadurch ergeben sich hohe Flexibilität und günstige Herstellungskosten.

FIG 3 zeigt nun eine Spulenvorrichtung 19, die die eigentliche elektromagnetische Antenne darstellt. Sie besitzt einen im Wesentlichen zylinderförmigen Kern 20 und am Außenumfang um sie herum eine Spule 21. Zur Flussführung ragt der Kern 20 hier deutlich über die Stirnseiten der Spule 21 hinaus.

Zur Montage der Schirmvorrichtung 10 auf die Spulenvorrichtung 19 wird die Schirmvorrichtung 10 an dem Schnitt 12 aufgespreizt. Die Spulenvorrichtung 19 wird dann durch den aufgespreizten Spalt des Schnitts 12 hindurchgesteckt. Anschließend oder gleichzeitig wird der zweite Schnitt 13 aufgespreizt und sodann wird die Spulenvorrichtung 19 auch durch den Spalt des zweiten Schnitts 13 hindurchgeführt. Das Resultat der Montage ist in den Figuren 4 bis 7 zu erkennen.

In der Draufsicht von FIG 4 ist zu sehen, dass die Enden des Kerns 20 der Spulenvorrichtung 19 aus den Schnitten 12 und 13 der Schirmvorrichtung 10 ragen. Die Spule 21 der Spulenvorrichtung 19 ist von oben her betrachtet durch den mittleren Abschnitt 15 der Schirmvorrichtung 10 verdeckt.

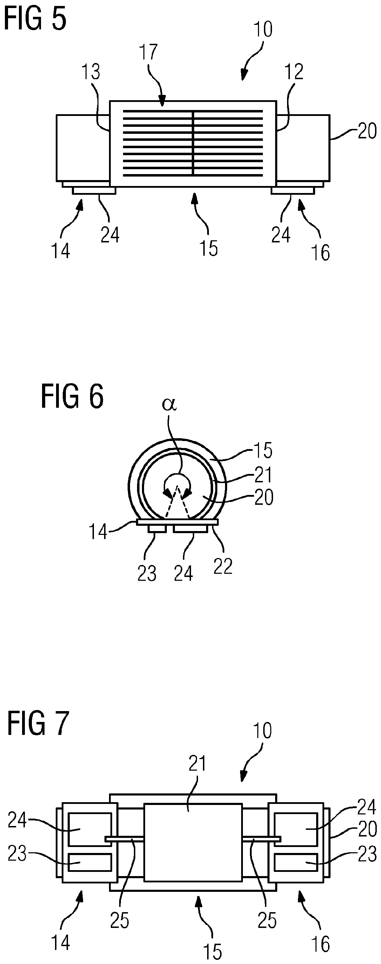

Die Längsseitenansicht von FIG 5 zeigt, dass der mittlere Abschnitt 15 der Schirmvorrichtung 10 die Spulenvorrichtung 19 an der Oberseite umgibt, während die äußeren Abschnitte 14 und 16 der Schirmvorrichtung 10 nur unten an den äußeren Bereichen des Kerns 20 anliegen. Dies bestätigt auch die Stirnseitenansicht von FIG 6. Dort schmiegt sich der Abschnitt 15 der Schirmvorrichtung 10 exakt an die Spule 21 an, die ihrerseits den Kern 20 umgibt. Es ist jedoch nicht notwendig, dass sich der Abschnitt 15 beziehungsweise die Schirmvorrichtung 10 spaltfrei an die Spule 21 beziehungsweise die Spulenvorrichtung 19 anschmiegt. In aller Regel ist ein solcher Spalt für die Montage eher günstig und kann im Nachhinein durch einen Klebstoff geschlossen werden.

Wie FIG 6 ferner zeigt, besitzt der im Wesentlichen zylinderförmige Kern 20 der Spulenvorrichtung 19 keinen Kreisquerschnitt, sondern ein Kreissegment als Querschnitt quer zur Längsachse. Das Kreissegment besitzt beispielsweise einen Mittelpunktswinkel von 320°. Damit ergibt sich für den Kern 20 eine Bodenfläche 22. An dieser Bodenfläche 22 können die äußeren Abschnitte 14 und 16 der Schirmvorrichtung 10 plan anliegen. An ihrer Unterseite, d. h. der dem Kern 20 abgewandten Seite besitzen die Abschnitte 14 und 16 jeweils ein erstes Kontaktfeld 23 und ein zweites Kontaktfeld 24. Diese Kontaktfelder 23, 24 stellen übliche SMD-Kontakt-Pads dar. Sie können beispielsweise aus Kupfer gefertigt sein und stehen vorzugsweise etwas von dem Substrat 11 des Abschnitts 14 oder 16 ab, sodass sie leicht durch Kontaktschweißen oder Reflow-Löten kontaktiert werden können.

Wie schließlich aus der Unterseitenansicht von FIG 7 zu erkennen ist, umgibt der mittlere Abschnitt 15 zwischen den Schnitten 12 und 13 der Schirmvorrichtung 10 die Spulenvorrichtung 19 an ihrem Umfang nicht vollständig, sodass dieser mittlere Abschnitt 15 eine Hülse bildet, bei der ein Teil ihrer Mantelfläche offen ist. Diese teilweise offene Hülse wird durch die Abschnitte 14 und 16 an ihren Stirnseiten zusammengehalten. Die Spulenvorrichtung 19 ist also in dem vorliegenden Beispiel im Bereich der Spule 21 nach unten hin nicht geschirmt.

FIG 7 zeigt außerdem ein erstes Kontaktfeld 23 jeweils im Abschnitt 14 und 16. Die ersten Kontaktfelder 23 sind innerhalb der Schirmvorrichtung 10 mit dem Leitergebilde 17 verbunden. Sie werden typischerweise durch einen Lötprozess an eine Masse angeschlossen. Prinzipiell genügt es, wenn die Schirmvorrichtung 10 über ein einziges erstes Kontaktfeld 23 verfügt.

In dem vorliegenden Beispiel ist die Antenne, d. h. die Spulenvorrichtung 19 zusammen mit der Schirmvorrichtung 10 als SMD-Bauteil ausgebildet. Dazu ist es nötig, dass auch für die Anschlüsse der Spule 21 Kontaktpads vorgesehen sind. Hierzu befinden sich zweite Kontaktpads 24 ebenfalls an den Unterseiten der Abschnitte 14 und 16 neben den ersten Kontaktpads 23 für Masse. Anschlüsse 25 der Spule 21 sind beispielsweise durch Punktschweißen mit den zweiten Kontaktfeldern 24 verbunden.

Erfindungsgemäß wird also eine Antenne mit hülsenförmiger Abschirmung bereitgestellt, wobei vorzugsweise eine flexible, gedruckte Leiterplatte um die Spulenvorrichtung appliziert wird. Die Abschirmschicht ist dabei nur teilweise um die Antenne gewickelt.

Die Antenne mit hülsenförmiger Abschirmung ist weniger empfindlich gegenüber elektrischen und magnetischen Interferenzen als ungeschirmte Antennen und sorgt daher für ein besseres Signal-zu-Rausch-Verhältnis. Damit lässt sich die Entfernung für drahtlose Kommunikation zwischen Geräten erhöhen.

Das einfache Design der Schirmvorrichtung ermöglicht den Einsatz für unterschiedliche Spulenvorrichtungen und somit für unterschiedliche Hörgerätemodelle. Auf individuelle Schirmabdeckungen kann somit verzichtet werden. Dies reduziert die Anzahl der Einzelteile bei der Hörgerätmontage. Darüber hinaus lässt sich die erfindungsgemäße Abschirmung für die Spulen in Massenproduktion herstellen. Ferner lassen sich mit der erfindungsgemäßen Spulenschirmung auch voluminöse Abschirmboxen für die Verstärker von Hörgeräten vermeiden, sodass letztlich die Hörgeräte miniaturisiert werden können.

## Patentansprüche

1. Antenne für ein Hörgerät mit
- einer im Wesentlichen zylindrischen Spulenvorrichtung (19) als elektromagnetische Sende- und/oder Empfangseinheit und
- einer Schirmvorrichtung (10), die die Spulenvorrichtung (19) umgibt und deren Grundkörper ein flexibles Substrat (11) ist,
**dadurch gekennzeichnet, dass**
- die Schirmvorrichtung (10) einteilig gebildet und durch zwei Schnitte (12, 13), die an keinem ihrer Enden an den Rand des Substrats (11) reichen, in drei Abschnitte (14, 15, 16) unterteilt ist und
- die Spulenvorrichtung (19) so durch die zwei Schnitte (12, 13) der Schirmvorrichtung (10) gesteckt ist, dass jeder der Abschnitte (14, 15, 16) die Spulenvorrichtung (19) in Umfangsrichtung nur teilweise umgibt.

2. Antenne nach Anspruch 1, wobei die Schirmvorrichtung (10) in allen drei Abschnitten (14, 15, 16) ein elektrisch zusammenhängendes Leitergebilde (17) besitzt.

3. Antenne nach Anspruch 2, wobei das Leitergebilde (17) zahlreiche parallele Leiterbahnen (18) aufweist.

4. Antenne nach dem vorhergehenden Anspruch, wobei die Schnitte (12, 13) der Schirmvorrichtung (10) parallel zueinander und die Leiterbahnen (18) parallel zu den Schnitten (12, 13) angeordnet sind.

5. Antenne nach einem der vorhergehenden Ansprüche, wobei die drei Abschnitte (14, 15, 16) der Schirmvorrichtung (10) in axialer Richtung der zylindrischen Spulenvorrichtung (19) hintereinander angeordnet sind und die äußeren beiden der drei Abschnitte (14, 15, 16) jeweils ein erstes Kontaktfeld (23) zum direkten Kontaktieren eines Masseanschlusses besitzen, wobei die ersten Kontaktfelder (23) mit Leitern der Schirmvorrichtung elektrisch verbunden sind.

6. Antenne nach Anspruch 5, wobei die äußeren beiden der drei Abschnitte (14, 15, 16) jeweils ein zweites Kontaktfeld (24) zum direkten Kontaktieren eines Leiters der Spulenvorrichtung (19) besitzen.

7. Antenne nach einem der vorhergehenden Ansprüche, wobei die Schirmvorrichtung (10) eine flexible Leiterplatte mit dem flexiblen Substrat (11) aufweist.

8. Antenne nach Anspruch 7, wobei die flexible Leiterplatte eine gedruckte Leiterplatte ist.

9. Antenne nach einem der vorhergehenden Ansprüche, wobei die Spulenvorrichtung (19) einen Kern (20) aufweist, dessen Querschnitt ein Kreissegment ist.

10. Verfahren zum Herstellen einer Antenne für ein Hörgerät durch
- Bereitstellen einer im Wesentlichen zylindrischen Spulenvorrichtung (19) als elektromagnetische Sende- und/ oder Empfangseinheit und
- Bereitstellen einer Schirmvorrichtung (10) zum Schirmen der Spulenvorrichtung (19), wobei der Grundkörper der Schirmvorrichtung ein flexibles Substrat (11) ist,
**dadurch gekennzeichnet, dass**
- die Schirmvorrichtung (10) einteilig gebildet und durch zwei Schnitte (12, 13), die an keinem ihrer Enden an den Rand des Substrats (11) reichen, in drei Abschnitte (14, 15, 16) unterteilt ist, und
- die Spulenvorrichtung (19) so durch die zwei Schnitte (12, 13) der Schirmvorrichtung (10) gesteckt wird, dass jeder der Abschnitte (14, 15, 16) die Spulenvorrichtung (19) in Umfangsrichtung nur teilweise umgibt.

## Claims

1. An antenna for a hearing device, the antenna comprising:
- a substantially cylindrical coil apparatus (19) being an electromagnetic transmitting and/or receiving unit and
- a shielding apparatus (10) surrounding said coil apparatus (19) and having a main body being a flexible substrate (11),
**characterized in that**
- said shielding apparatus (10) is formed as a single piece and is subdivided into three sections (14, 15, 16) by two slits (12, 13) having ends not reaching the edge of the substrate (11) and
- said coil apparatus (19) is inserted through said two slits (12, 13) in said shielding apparatus (10) with each of said sections (14, 15, 16) only partially surrounding said coil apparatus (19) in the circumferential direction.

2. The antenna according to claim 1, wherein said shielding apparatus (10) has an electrically connected conductor structure (17) in all three of said sections (14, 15, 16).

3. The antenna according to claim 2, wherein said conductor structure (17) has a multiplicity of parallel conductor tracks (18).

4. The antenna according to the preceding claim, wherein said slits (12, 13) in said shielding apparatus (10) are disposed parallel to each other and said conductor tracks (18) are disposed parallel to said slits (12, 13).

5. The antenna according to one of the preceding claims, wherein said three sections (14, 15, 16) of said shielding apparatus (10) are disposed one behind the other in the axial direction of said cylindrical coil apparatus (19) and the two outer sections of the three sections (14, 15, 16) each have a first contact tab (23) for directly contacting a ground terminal, wherein said first contact tabs (23) are electrically connected to said conductors of said shielding apparatus.

6. The antenna according to claim 5, wherein said two outer sections of the three sections (14, 15, 16) each have a second contact tab (24) for directly contacting a conductor of said coil apparatus (19).

7. The antenna according to one of the preceding claims, wherein said shielding apparatus (10) has a flexible circuit board with said flexible substrate (11) .

8. The antenna according to claim 7, wherein said flexible circuit board is a printed circuit board.

9. The antenna according to one of the preceding claims, wherein said coil apparatus (19) has a core (20), the cross-section of which is a segment of a circle.

10. A method for manufacturing an antenna for a hearing device by
- providing a substantially cylindrical coil apparatus (19) being an electromagnetic transmitting and/or receiving unit and
- providing a shielding apparatus (10) for shielding the coil apparatus (19), the main body of the shielding apparatus being a flexible substrate (11), **characterized in that**
- the shielding apparatus (10) is formed as a single piece and is subdivided into three sections (14, 15, 16) by two slits (12, 13) having ends not reaching the edge of the substrate (11), and
- the coil apparatus (19) is inserted through the two slits (12, 13) in the shielding apparatus (10) with each of the sections (14, 15, 16) only partially surrounding the coil apparatus (19) in the circumferential direction.

## Revendications

1. Antenne pour appareil auditif dotée
- d'un dispositif de bobinage (19) essentiellement cylindrique en tant qu'unité d'émission et/ou de réception électromagnétique
- d'un dispositif d'écran (10), entourant le dispositif de bobinage (19) et dont le corps principal est un substrat flexible (11),
**caractérisée en ce que**
- le dispositif d'écran (10) est conçu en une partie et est divisé en trois sections (14, 15, 16) au moyen de deux incisions (12, 13) dont aucune extrémité n'atteint le bord du substrat (11) et
- le dispositif de bobinage (19) est placé au moyen des deux incisions (12, 13) du dispositif d'écran (10) de telle sorte que chacune des sections (14, 15, 16) n'entoure que partiellement le dispositif de bobinage (19) dans la direction circonférentielle.

2. Antenne selon la revendication 1, dans laquelle le dispositif d'écran (10) possède dans les trois sections (14, 15, 16) une structure conductrice électriquement continue (17).

3. Antenne selon la revendication 2, dans laquelle la structure conductrice (17) comporte de multiples bandes conductrices parallèles (18).

4. Antenne selon l'une des revendications précédentes, dans laquelle les incisions (12, 13) du dispositif d'écran (10) sont agencées parallèlement l'une à l'autre et les bandes conductrices parallèles (18) sont agencées parallèlement aux incisions (12, 13).

5. Antenne selon l'une des revendications précédentes, dans laquelle les trois sections (14, 15, 16) du dispositif d'écran (10) sont agencées consécutivement l'une à l'autre dans la direction axiale du dispositif de bobinage (19) cylindrique et les deux sections les plus à l'extérieur parmi les trois (14, 15, 16) possèdent chacune un premier champ de contact (23) afin d'avoir un contact direct avec la borne de masse, dans laquelle le premier champ de contact (23) est raccordé électriquement avec des conducteurs du dispositif d'écran.

6. Antenne selon la revendication 5, dans laquelle les deux sections les plus à l'extérieur parmi les trois (14, 15, 16) possèdent chacune un second champ de contact (24) afin d'avoir un contact direct avec un conducteur du dispositif de bobinage (19).

7. Antenne selon l'une des revendications précédentes, dans laquelle le dispositif d'écran (10) comporte une plaque conductrice flexible avec le substrat flexible (11) .

8. Antenne selon la revendication 7, dans laquelle la plaque conductrice flexible est une plaque conductrice imprimée.

9. Antenne selon l'une des revendications précédentes, dans laquelle le dispositif de bobinage (19) comporte un noyau (20), dont la coupe transversale est un arc de cercle.

10. Procédé pour la fabrication d'une antenne pour appareil auditif par
- disposition d'un dispositif de bobinage (19) essentiellement cylindrique en tant qu'unité d'émission et/ou de réception électromagnétique
- disposition d'un dispositif d'écran (10) pour protéger le dispositif de bobinage (19), dans lequel le corps principal du dispositif d'écran est un substrat flexible (11),
**caractérisé en ce que**
- le dispositif d'écran (10) est conçu en une partie et est divisé en trois sections (14, 15, 16) au moyen de deux incisions (12, 13) dont aucune extrémité n'atteint le bord du substrat (11) et
- le dispositif de bobinage (19) est placé au moyen des deux incisions (12, 13) du dispositif d'écran (10) de telle sorte que chacune des sections (14, 15, 16) n'entoure que partiellement le dispositif de bobinage (19) dans la direction circonférentielle.
